# EUROPEAN PATENT SPECIFICATION

(11) **EP 2 988 253 B1**
(45) Date of publication and mention of the grant of the patent: **01.08.2018**
(21) Application number: 15181254.2
(22) Date of filing: 17.08.2015
(51) Int. Cl.: G06K 19/077

(54) **DATA CARRIER TAG FOR LIQUID CONTAINERS AND METHOD FOR MOUNTING THE TAG TO THE CONTAINER**
DATENTRÄGERETIKETT FÜR FLÜSSIGKEITSBEHÄLTER UND VERFAHREN ZUR MONTAGE DES ETIKETTS AM BEHÄLTER
ÉTIQUETTE DE SUPPORT DE DONNÉES POUR CONTENANTS DE LIQUIDE ET PROCÉDÉ DE MONTAGE DE L'ÉTIQUETTE SUR LE RÉCIPIENT

(30) Priority: 19.08.2014 TR 201409659
(43) Date of publication of application: 24.02.2016
(73) Proprietor: Gürtuna, Ahmet Giral, Lefkosa (CY)
(72) Inventor: GÜRTUNA, Ahmet G Ral, Lefkosa (CY)
(74) Representative: Yamankaradeniz, Kemal

(56) References cited:
- EP-A1- 0 875 292
- DE-A1-102005 031 579
- JP-A- 2007 230 644
- US-A1- 2006 132 311

## Description

### TECHNICAL FIELD

The invention relates to a data carrier tag so as to track the liquid containers from the production date to the expiration date thereof and to a method providing said tag to be mounted onto the liquid carrier container.

The invention especially relates to a data carrier tag which is applied for registering and tracking the refillable water bottles (i.e. large water bottles) used for carrying the potable water, comprises data storage elements such as RFID chip and barcode that can be mounted permanently onto the bottle, and to the adaptation of said tag to the container.

### PRIOR ART

There is a need with respect to tracking the refillable potable water containers (bottles) during the use thereof, nowadays. Some applications serving for the same purpose are available. In one of them, the container is monitored by adhering a label, which comprises thereon the barcode of the respective container, to the container surface, and by reading said barcode. The disadvantage of said method is that the barcode becomes unreadable as the label is displaced or is worn off due to external factors during the use of the bottle.

In the second alternative method used nowadays, a label, on which chip (RFID, radio frequency identification) operating with radio frequency is placed, is adhered to the container surface, the required data relating to the container is digitally processed to said chip and then the data relating to the use is processed and read during the use; thereby, the container is monitored. Likewise, in this method the chip becomes unreadable as the label is displaced or is worn off or damaged due to external factors during the use of the container. Moreover, as the liquid (e.g. water) inside the container affects the radio waves (particularly, UHF and SHF) and chip performance, problems may be encountered while reading the chips.

To conclude, due to the need for monitoring system which is applied for registering and monitoring any type of refillable liquid containers used for carrying potable water or any type of liquid, and the inadequacy of the existing solutions, a development is deemed necessary to be made in the related technical field.

JP2007230644 A relates to a plastic casing (1) moulded via blowing which comprises a contact free IC tag (8). In order to associate said contact-free tag (8) onto the casing (1), a recess (7) is provided on the casing (1). After the tag (8) is placed within the recess (7), the casing is surrounded by an adhesive material (9) such that it would also include the recess (7), and it is fixed on the casing (1) in this manner.

### BRIEF DESCRIPTION OF THE INVENTION

The present invention relates to a liquid container according to claim 1 and a method which provides a data carrier tag according to claim 8.

To eliminate the disadvantages in the state of the art, the present invention solves the problems such as displacement, wear and damage due to the impacts as the RFID chips, barcodes or similar data codes are mounted permanently to the container surface instead of using a label and the like.

The invention enables to establish a reliable tracking system solving the readability problem of the some types of chips because of the liquid and increasing the reading distance of some types of chips by providing the chip to be positioned at a specific distance from the liquid (e.g water) inside the container during the mounting of the chip onto the container.

Another object of the invention is to identify the containers and thus to be able track any data including the production date of a container, manufacturer lot number, the last filling date with respect to filling of the container, the number of filling performed, the storage, dealer, distributor and the date on which the container is delivered to and received back from the end users, in the computer environment.

The invention enables to perform tracking the container inventories, dealer and distributor performances, and containers in the system in a reliable manner by the firms using the refillable liquid containers.

Thanks to the present invention, the consumer can also track the product that s/he has bought.

Another object of the invention is to provide a fast detection of which container is present in which dealer, storage, distributor or customer and a fast recollection of the defective products from the system after the detection of a quality problem likely to be experienced during filling especially in the containers contacting with the food.

Another object of the invention is to minimize the damages likely to occur due to quality problems that may threaten human health.

To achieve all the objects which are mentioned above and will be understood from the detailed description below, the present invention relates to a method which provides the data carrier tag having at least one data storage element where several data relating to the liquid container can be coded and read through readers to be mounted to the liquid container permanently so as to provide tracking of the liquid containers. Said method comprises the following process steps;
- Producing data carrier tag and connecting the same with the data storage element,
- Placing the data carrier tag into the blowing or rotary mold manually or automatically during blow or rotational molding of the liquid container;
- Mounting the tag onto the body permanently by means of the plastic material, which forms the liquid container, surrounding the data carrier tag wall partially or completely during the blowing or rotating processes.

Said data storage element can be any of the encoding elements such as an RFID chip or 1D barcode and 2D barcode.

The invention also relates to a data carrier tag which is produced in a manner to comprise a distance providing section which provides a specific distance between the chip and the liquid container in case the RFID chip is used as a data storage element. Thus, the liquid inside the container will by no means prevent the readability of the RFID chip.

The present invention should be evaluated with the figures described below to ensure the best understanding of the embodiment and advantages, together with the additional elements, of the invention.

### BRIEF DESCRIPTION OF THE FIGURES

Figure 1 is the general view of the liquid container.
Figure 2 is the detailed view of the data carrier tag.
Figure 3 is the view of the data carrier tag together with the sealing element.
Figure 4 is the detailed view of the sealing element.

### REFERENCE NUMBERS

1 Liquid container
1.1 Body
2 Data carrier tag
2.1 Fitting surface
2.2 Protrusion
2.2.1 Distance providing section
2.3 Lug slot
3 Data storage element
4 Sealing element
4.1 Body
4.2 Fixing lug
4.3 O-ring
L: Distance

### DETAILED DESCRIPTION OF THE INVENTION

In this detailed description, the novelty of the invention is described by way of examples only for a better understanding of the subject without any limiting effect. Accordingly, the invention is a data carrier tag (2) which provides the control and tracking of the liquid containers (1) made of any type of plastic and a method for mounting said data carrier tag (2) to the liquid container (1).

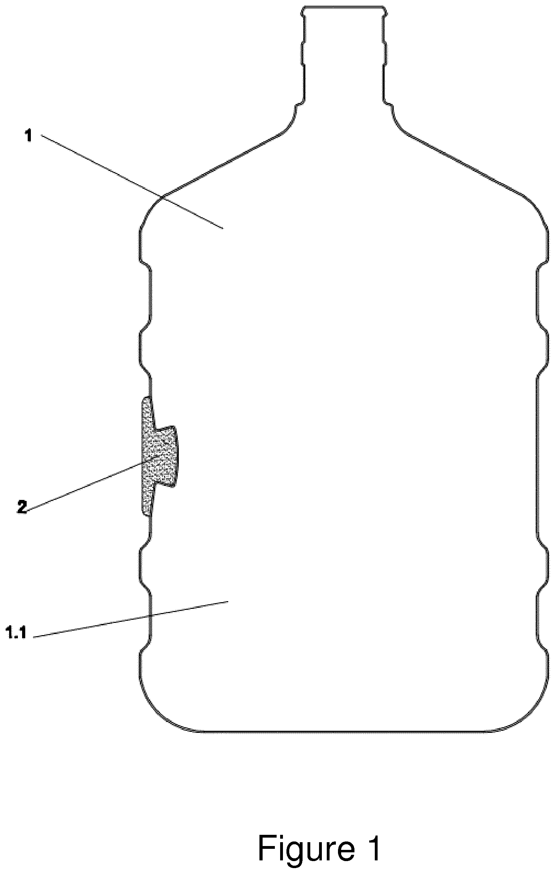

Figure 1 is the general view of the liquid container (1) to which the data carrier tag (2) according to the invention is adapted. The data carrier tag (2) is permanently adapted onto the body (1.1) section of the liquid container (1) in a manner not to prevent the use of container (1) during the production of the container (1). The data carrier tag (2) can be produced of a plastic or any kind of material, or of more than one material.

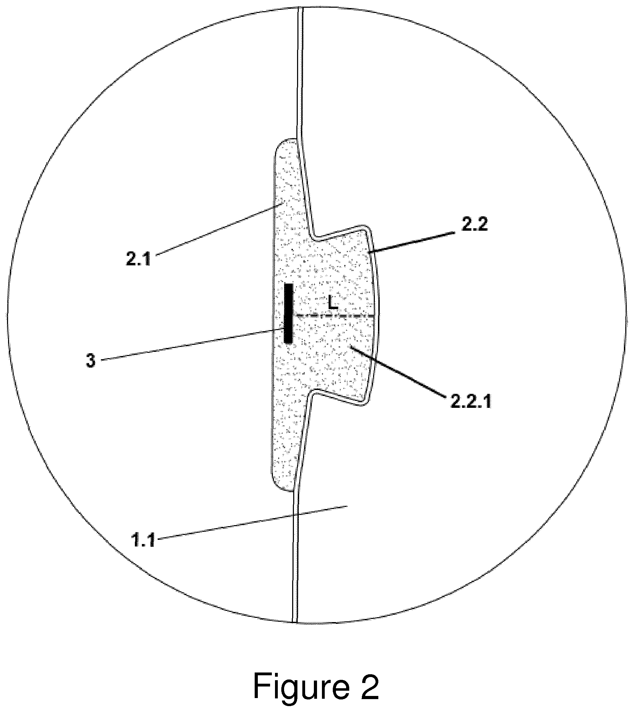

Figure 2 is the detailed view of the data carrier tag (2). Accordingly, the data carrier tag (2) comprises a fitting section (2.1) and a protrusion (2.2) which extends following said fitting section (2.1). At least one data storage element (3) is located in the fitting section (2.1). Said data storage element (3) is an RFID chip or an optical element such as barcode or QR code. In case an RFID chip is used as a data storage element (3), the chip is positioned in the fitting section (2.1) as seen in Figure 2. In case of using an optical element, however, the optical element is formed on the front surface of the fitting section (2.1). The section called protrusion (2.2) is integrated with the liquid container (1) and provides attachment during the mounting of the data carrier tag (2) onto the liquid container (1). Another important function of this section is to provide a specific distance (L) between the chip and the liquid carried in the liquid container (1) when the RFID chip is used. This distance (L) provides the readability and/or increases the reading distance of the RFID chip. To this end, the protrusion section (2.2) is produced in a manner to comprise a distance providing section (2.2.1). The distance providing section (2.2.1) can be formed of the same material as that of the data carrier tag (2) or a different material with a geometric structure having a perforated or honeycomb form, or with a space so as to obtain the optimum reading performance from the RFID chip. During the production of the data carrier tag (2), by carrying out performance tests it can be determined in which condition the highest reading performance is obtained; thus, the distance providing section (2.2.1) can be produced accordingly.

The data carrier tag (2) provides the liquid containers (1) to be identified and tracked during the operating time thereof by means of the data carrier tag (3). In case the RFID chip is used as a data storage element (3), both static and dynamic data including the production date of the liquid container (1), manufacturer lot number, the first and last filling dates, the number of filling performed, the storage, dealer, distributor and the date on which the container is delivered to and received back from the end users, and also the dynamic process data relating to the product in the container can be written to the memory on the chip when necessary. In case of using encoding elements such as 1D or QR code as a data storage element (3), only the static data can be recorded on the element while the dynamic data can be monitored in the computer environment by being matched with the identity codes of these elements. After the data storage element (3) is read by a suitable reader, said data can be accessed and tracking of the liquid containers (1) is provided in the computer environment.

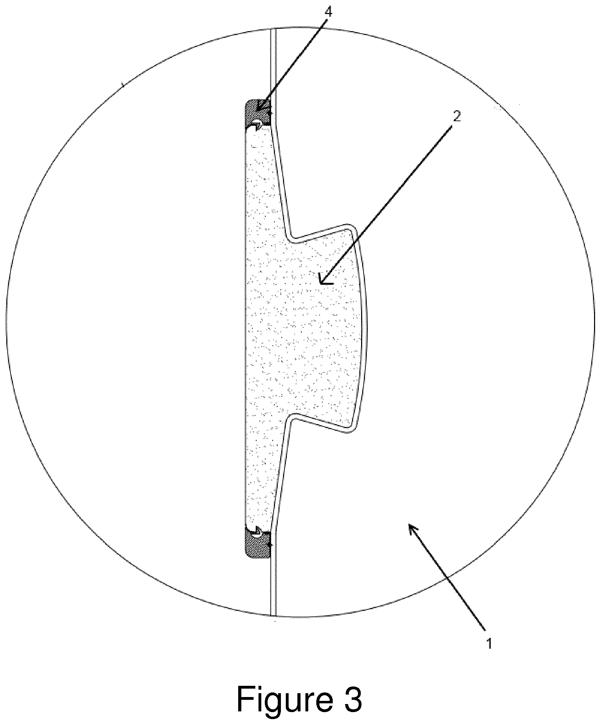

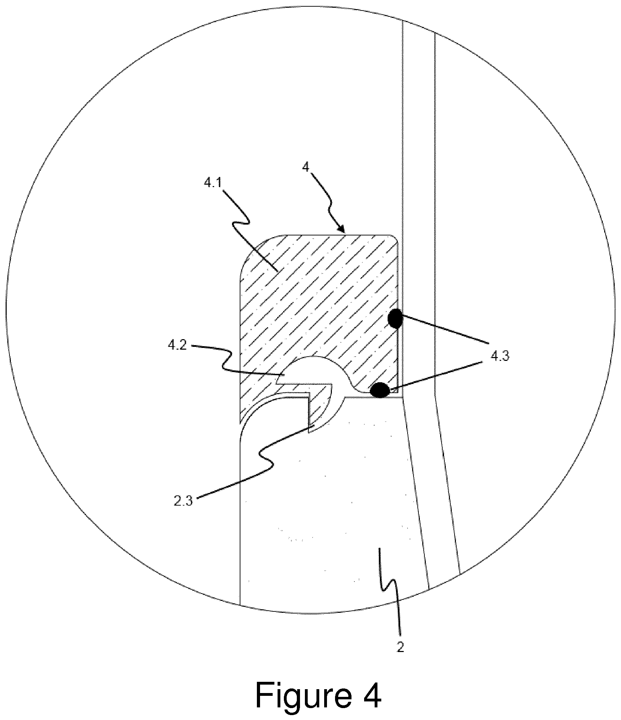

Prior to being refilled, the recyclable liquid containers (1) are subjected to interior and exterior washing process. During exterior washing, a sealing element (4) is used in order to prevent the wash water from leaking between the data carrier tag (2) and liquid container (1). The view of the sealing element (4) connected to the data carrier tag (2) is given in Figure 3. The detailed view of the sealing element (4) is given in Figure 4. Accordingly, the sealing element (4) comprises a body (4.1), at least one fixing lug (4.2) and at least one O-ring (4.3) configured on the body (4.1). Fixing slots (2.3), into which said fixing lug (4.2) is fitted, are provided on the data carrier tag (2). The sealing element (4) is mounted onto the data carrier tag (2) permanently by means of the fixing lugs (4.2). During mounting, the O-ring (4.3) is compressed between the data carrier tag (2) and sealing element (4) and/or the data carrier tag (2) and liquid container (1) and/or the liquid container (1), data carrier tag (2) and sealing element (4) body (4.1), thereby achieving a permanent sealing.

The adaptation of the data carrier tag (2) to the liquid container (1) within the scope of the invention is as follows;
- Producing data carrier tag (2) and connecting the same with the data storage element (3),
- Placing the data carrier tag (2) into the blowing or rotary mold manually or automatically during blow or rotational molding of the liquid container (1);
- Mounting the tag (2) onto the body (1.1) permanently by means of the plastic material, which forms the liquid container (1), surrounding the data carrier tag (2) wall partially or completely during the blowing or rotating processes.

Each of the data storage element has a unique fixed identity code. The identity code of the data storage element (3) on the liquid container (1), the production of which is completed, forms the identity of the liquid container (1). Subsequent to recording the identity code in the computer database, the identification process of the liquid container (1) is achieved. After this stage, the liquid container (1) can be tracked through the computer system throughout its lifetime.

## Claims

1. A liquid container (1) which is made of plastic and comprising a data carrier tag (2) permanently adapted on its body (1.1), the data carrier tag (2) comprising at least one data storage element (3) wherein several data relating to the liquid container (1) can be coded and read through readers and the liquid container (1) **characterized in that** the data carrier tag (2) comprises;
- at least one fitting section (2.1) which carries said data storage element (3);
- and a protrusion section (2.2) which extends following said fitting section (2.1) and provides the data carrier tag (2) to be integrated with the liquid container (1) during blow or rotational molding of the liquid container (1).

2. The liquid container (1) according to Claim 1, **characterized in that** data storage element (3) is a RFID chip.

3. The liquid container (1) according to Claim 1, **characterized in that** data storage element (3) is an optical element such as 1D or 2D barcode.

4. The liquid container (1) according to Claim 2, **characterized in that** the protrusion section (2.2) comprises a distance providing section (2.2.1) which provides a specific distance (L) between the RFID chip and a liquid in the liquid container (1).

5. The liquid container (1) according to Claim 4, **characterized in that** said distance providing section (2.2.1) is formed of the same material as that of the data carrier tag (2) or a different material with geometric structures having a perforated or honeycomb form, and/or with a space.

6. The liquid container (1) according to Claim 1, **characterized in that** the data carrier tag (2) comprises at least one fixing slot (2.3) which provides a sealing element (4) to be mounted thereon so as to provide the sealing thereof with the liquid container (1).

7. The liquid container (1) according to Claim 6, **characterized in that** said sealing element (4) comprises a body (4.1), at least one fixing lug (4.2) provided on the body (4.1) and fitting into at least one fixing slot (2.3), O-ring (4.3) fitting between the data carrier tag (2) and body (4.1) and/or the data carrier tag (2) and liquid container (1) and/or the data carrier tag (2), liquid container (1) and/or sealing element (4).

8. A method which provides a data carrier tag (2) having a data storage element (3) wherein several data relating to a liquid container (1) can be coded and read through readers to be mounted to the liquid container (1) permanently so as to provide tracking of the liquid container (1), **characterized in** comprising the following process steps;
- Producing data carrier tag (2) and connecting the same with the data storage element (3),
- Placing the data carrier tag (2) into a blowing or rotary mold manually or automatically during blow or rotational molding of the liquid container (1);
- Mounting the tag (2) onto a body (1.1) permanently by means of a plastic material, which forms the liquid container (1), surrounding the data carrier tag (2) wall partially or completely during the blow or rotational molding.

9. The method according to Claim 8, **characterized in that** the data storage element (3) is a RFID chip.

10. The method according to Claim 8, **characterized in that** the data storage element (3) is a data code such as 1D barcode or 2D barcode.

11. The method according to Claim 9, **characterized in that** a distance providing section (2.2.1) is formed so as to provide the readability of the RFID chip between the RFID chip and a liquid in the liquid container (1) and/or increase the reading distance thereof during the production of the data carrier tag (2).

12. The method according to Claim 8, **characterized in that** at least one fixing slot (2.3) is formed on the data carrier tag (2) during the production thereof.

## Patentansprüche

1. Flüssigkeitsbehälter (1), der aus Kunststoff hergestellt ist und ein Datenträgeretikett (2) umfasst, das dauerhaft auf seinen Körper (1.1) angepasst ist, wobei das Datenträgeretikett (2) mindestens ein Datenspeicherelement (3) umfasst, wobei mehrere Daten in Bezug auf den Flüssigkeitsbehälter (1) durch Lesegeräte codiert und gelesen werden können und der Flüssigkeitsbehälter (1) **dadurch gekennzeichnet ist, dass** das Datenträgeretikett (2) Folgendes umfasst;
- mindestens einen Formstückabschnitt (2.1), der das Datenspeicherelement (3) trägt;
- und einen Vorsprungsabschnitt (2.2), der sich anschließend an den Formstückabschnitt (2.1) erstreckt und das Datenträgeretikett (2) bereitstellt, das in den Flüssigkeitsbehälter (1) während des Blas- oder Rotationsformens des Flüssigkeitsbehälters (1) integriert werden soll.

2. Flüssigkeitsbehälter (1) nach Anspruch 1, **dadurch gekennzeichnet, dass** das Datenspeicherelement (3) ein RFID-Chip ist.

3. Flüssigkeitsbehälter (1) nach Anspruch 1, **dadurch gekennzeichnet, dass** das Datenspeicherelement (3) ein optisches Element ist, wie z. B. ein 1D-oder 2D-Barcode.

4. Flüssigkeitsbehälter (1) nach Anspruch 2, **dadurch gekennzeichnet, dass** der Vorsprungsabschnitt (2.2) einen Abstandsbereitstellungsabschnitt (2.2.1) umfasst, der einen spezifischen Abstand (L) zwischen dem RFID-Chip und einer Flüssigkeit im Flüssigkeitsbehälter (1) bereitstellt.

5. Flüssigkeitsbehälter (1) nach Anspruch 4, **dadurch gekennzeichnet, dass** der Abstandsbereitstellungsabschnitt (2.2.1) aus dem gleichen Material wie das des Datenträgeretiketts (2) oder aus einem anderen Material mit geometrischen Strukturen, die eine durchlöcherte oder wabenartige Form aufweisen, und/oder mit einer Aussparung ausgebildet ist.

6. Flüssigkeitsbehälter (1) nach Anspruch 1, **dadurch gekennzeichnet, dass** das Datenträgeretikett (2) mindestens einen Fixierschlitz (2.3) umfasst, der ein darauf anzubringendes Dichtelement (4) bereitstellt, um die Abdichtung davon mit dem Flüssigkeitsbehälter (1) bereitzustellen.

7. Flüssigkeitsbehälter (1) nach Anspruch 6, **dadurch gekennzeichnet, dass** das Dichtelement (4) einen Körper (4.1), mindestens eine Fixiernase (4.2), die auf dem Körper (4.1) bereitgestellt ist und die in mindestens einen Fixierschlitz (2.3) passt, und einen O-Ring (4.3) umfasst, der zwischen das Datenträgeretikett (2) und den Körper (4.1) und/oder das Datenträgeretikett (2) und den Flüssigkeitsbehälter (1) und/oder das Datenträgeretikett (2), den Flüssigkeitsbehälter (1) und/oder das Dichtungselement (4) passt.

8. Verfahren, das ein Datenträgeretikett (2) mit einem Datenspeicherelement (3) bereitstellt, wobei mehrere Daten in Bezug auf einen Flüssigkeitsbehälter (1) durch Lesegeräte codiert und gelesen werden können, die dauerhaft an dem Flüssigkeitsbehälter (1) angebracht werden sollen, um ein Verfolgen des Flüssigkeitsbehälters (1) bereitzustellen, **dadurch gekennzeichnet, dass** es die folgenden Verfahrensschritte umfasst;
- Produzieren eines Datenträgeretiketts (2) und Verbinden desselben mit dem Datenspeicherelement (3),
- manuelles oder automatisches Platzieren des Datenträgeretiketts (2) in einer Blas- oder Rotationsform während eines Blas- oder Rotationsformens des Flüssigkeitsbehälters (1);
- dauerhaftes Anbringen des Etiketts (2) auf einem Körper (1.1) mithilfe eines Kunststoffmaterials, das den Flüssigkeitsbehälter (1) ausbildet, der die Wand des Datenträgeretiketts (2) teilweise oder vollständig während des Blas- oder Rotationsformens umgibt.

9. Verfahren nach Anspruch 8, **dadurch gekennzeichnet, dass** das Datenspeicherelement (3) ein RFID-Chip ist.

10. Verfahren nach Anspruch 8, **dadurch gekennzeichnet, dass** das Datenspeicherelement (3) ein Datencode ist, wie z. B. ein 1D-Barcode oder 2D-Barcode.

11. Verfahren nach Anspruch 9, **dadurch gekennzeichnet, dass** ein Abstandsbereitstellungsabschnitt (2.2.1) ausgebildet ist, um die Lesbarkeit des RFID-Chips zwischen dem RFID-Chip und einer Flüssigkeit in dem Flüssigkeitsbehälter (1) bereitzustellen und/oder den Leseabstand davon während der Produktion des Datenträgeretiketts (2) zu erhöhen.

12. Verfahren nach Anspruch 8, **dadurch gekennzeichnet, dass** mindestens ein Fixierschlitz (2.3) auf dem Datenträgeretikett (2) während der Produktion davon ausgebildet wird.

## Revendications

1. Récipient de liquide (1) en plastique et comprenant
une étiquette de support de données (2)
adaptée de manière permanente sur son corps (1.1), ladite étiquette de support de données (2) comprenant au moins un
élément de stockage de données (3),
plusieurs données concernant le récipient de liquide (1) pouvant être codées et lues par des lecteurs et ledit récipient de liquide (1) étant **caractérisé en ce que** l'étiquette de support de données (2) comprend ;
- au moins une partie d'adaptation (2.1) qui porte ledit élément de stockage de données (3) ;
- et une partie de saillie (2.2) s'étendant en suivant ladite partie d'adaptation (2.1) et formant l'étiquette de support de données (2) à intégrer au récipient de liquide (1) durant le moulage par soufflage ou le rotomoulage du récipient de liquide (1).

2. Récipient de liquide (1) selon la revendication 1, **caractérisé en ce que** l'élément de stockage de données (3) est une puce de radio-identification (RFID).

3. Récipient de liquide (1) selon la revendication 1, **caractérisé en ce que** l'élément de stockage de données (3) est un élément optique tel qu'un code-barres 1D ou 2D.

4. Récipient de liquide (1) selon la revendication 2, **caractérisé en ce que** la partie de saillie (2.2) comprend une partie assurant une distance (2.2.1) qui assure une distance spécifique (L) entre la puce RFID et un liquide dans le récipient de liquide (1).

5. Récipient de liquide (1) selon la revendication 4, **caractérisé en ce que** ladite partie assurant une distance (2.2.1) est constituée du même matériau que celui de l'étiquette de support de données (2) ou d'un matériau différent avec des structures géométriques possédant une forme perforée ou en nid d'abeilles, et/ou avec un espace.

6. Récipient de liquide (1) selon la revendication 1, **caractérisé en ce que** l'étiquette de support de données (2) comprend au moins une fente de fixation (2.3) qui fournit un élément d'étanchéité (4) à monter sur celle-ci de façon à assurer l'étanchéité de celle-ci avec le récipient de liquide (1).

7. Récipient de liquide (1) selon la revendication 6, **caractérisé en ce que** ledit élément d'étanchéité (4) comprend un corps (4.1), au moins une languette de fixation (4.2) disposée sur le corps (4.1) et s'adaptant dans au moins une fente de fixation (2.3), un joint torique (4.3) s'adaptant entre l'étiquette de support de données (2) et le corps (4.1) et/ou l'étiquette de support de données (2) et le récipient de liquide (1) et/ou l'étiquette de support de données (2), le récipient de liquide (1) et/ou l'élément d'étanchéité (4).

8. Procédé fournissant une étiquette de support de données (2) possédant un élément de stockage de données (3) dans lequel
plusieurs données concernant un récipient de liquide (1) peuvent être codées et lues par des lecteurs à monter au récipient de liquide (1) de manière permanente de façon à assurer un suivi du récipient de liquide (1) caractérisé en comprenant les étapes de procédé suivantes ;
- la production d'une étiquette de support de données (2) et le raccordement de celle-ci avec l'élément de stockage de données (3),
- la mise en place de l'étiquette de support de données (2) dans un moulage par soufflage ou un rotomoulage de manière manuelle ou automatique durant le moulage par soufflage ou le rotomoulage du récipient de liquide (1) ;
- le montage de l'étiquette (2) sur un corps (1.1) de manière permanente au moyen d'un matériau en plastique, qui forme le récipient de liquide (1) entourant la paroi de l'étiquette de support de données (2) partiellement ou complètement durant le moulage par soufflage ou le rotomoulage.

9. Procédé selon la revendication 8, **caractérisé en ce que** l'élément de stockage de données (3) est une puce de radio-identification (RFID).

10. Procédé selon la revendication 8, **caractérisé en ce que** l'élément de stockage de données (3) est un code de données tel qu'un code-barres 1D ou un code-barres 2D.

11. Procédé selon la revendication 9, **caractérisé en ce qu'**une partie assurant une distance (2.2.1) est formée de façon à assurer la lisibilité de la puce RFID entre la puce RFID et un liquide dans le récipient de liquide (1) et/ou d'augmenter la distance de lecture de celle-ci durant la production de l'étiquette de support de données (2).

12. Procédé selon la revendication 8, **caractérisé en ce qu'**au moins une fente de fixation (2.3) est formée sur l'étiquette de support de données (2) durant la production de celle-ci.
